# EUROPÄISCHE PATENTSCHRIFT

(11) **EP 4 035 252 B1**
(45) Veröffentlichungstag und Bekanntmachung des Hinweises auf die Patenterteilung: **09.09.2026**
(21) Anmeldenummer: 21700270.8
(22) Anmeldetag: 08.01.2021
(51) Int. Cl.: H02K 1/276, H02K 1/14

(54) **ANORDNUNG AUS EINEM STATORBLECH UND EINEM ROTORBLECH**
ASSEMBLY COMPRISING A STATOR LAMINATION AND A ROTOR LAMINATION
ASSEMBLAGE D'UN NOYAU DE STATOR ET D'UN NOYAU DE ROTOR

(30) Priorität: 10.01.2020 DE 102020100427
(43) Veröffentlichungstag der Anmeldung: 03.08.2022
(73) Patentinhaber: Metabowerke GmbH, 72622 Nürtingen (DE)
(72) Erfinder: FLOETE, Enrico, 70599 Stuttgart (DE)
(74) Vertreter: Schmid, Wolfgang
(86) Internationale Anmeldenummer: PCT/EP2021/050224
(87) Internationale Veröffentlichungsnummer: WO 2021/140171

(56) Entgegenhaltungen:
- EP-A1- 1 734 638
- EP-A2- 2 463 988
- DE-A1- 102017 223 650
- JP-A- 2001 069 701
- US-A1- 2016 197 524

## Beschreibung

Die Erfindung betrifft eine Anordnung aus einem Statorblech und einem in einer zentralen Ausnehmung des Statorblechs angeordneten Rotorblech. Des Weiteren betrifft die Erfindung einen Elektromotor mit einem Stator und einem Rotor.

Eine gattungsgemäße Anordnung aus einem Statorblech und einem Rotorblech sowie ein Elektromotor mit einer solchen Anordnung ist aus der EP 2 463 988 A2 bekannt.

Weitere solche Anordnungen sind aus der EP 1 734 638 A1, JP 2001069701 A, DE 10 2017 223 650 A1 und DE 10 2007 029 157 A1 bekannt.

Die DE 102017 103 619 A1 beschreibt ein Rotorblech, dessen Außenkontur von einer Kreisform abweicht.

Eine permanenterregte Synchronmaschine mit Schalenmagneten ist in der EP 2 073 352 B1 beschrieben.

Ein weiterer Rotor für einen Elektromotor ist aus der DE 10 2013 009 115 A1 bekannt.

In der DE 10 2009 054 069 A1 ist ein Statorblech für einen Stator eines Elektromotors beschrieben.

Aus der WO 2018/162074 A1 ist ein Permanentmagnet-Synchronmotor mit einem Stator und einem drehbar innerhalb des Stators angeordneten Rotor bekannt. Der Stator umfasst Statorzähne mit Flanschabschnitten, die sich in entgegengesetzten Umfangsrichtungen entlang eines Luftspalts zwischen dem Stator und Rotor erstrecken. Der Rotor und der Stator umfassen Ausnehmungen an äußeren Umfangsabschnitten, die an den Luftspalt zwischen dem Stator und dem Rotor angrenzen.

Die WO 2017/011682 A1 beschreibt einen bürstenlosen Motor mit einem Stator mit einem Statorkern und Wicklungszähnen, die gleichmäßig auf dem Statorkern verteilt sind, und einem Rotor, der drehbar innerhalb des Stators angeordnet ist

Ein Elektromotor mit einem mehrere Polschuhe aufweisenden Stator und einem Rotor ist in der DE 11 2017 000 188 T5 beschrieben.

Eine grundsätzliche Bestrebung bei der Konstruktion von Elektromotoren kann darin bestehen, einen sinusförmigen Luftspalt zwischen dem Stator und dem in demselben angeordneten Rotor zu erreichen. Wenn hierzu eine Lösung wie bei der DE 10 2017 103 619 A1 eingesetzt wird, so kann dies zu Einschränkungen bezüglich der maximalen Größe der in den Magnettaschen aufgenommenen Permanentmagneten führen, wodurch sich das maximale Drehmoment und damit auch die maximale Leistung des mit einem solchen Rotor ausgestatteten Elektromotors verringern kann.

Es ist daher Aufgabe der vorliegenden Erfindung, eine Anordnung aus einem Statorblech und einem in einer zentralen Ausnehmung des Statorblechs angeordneten Rotorblech zu schaffen, die einen den Betrieb des Elektromotors verbessernden Luftspalt aufweist, wobei die Leistung des Elektromotors nicht nachteilig beeinflusst wird.

Erfindungsgemäß wird diese Aufgabe durch die in unabhängigem Anspruch 1 genannten Merkmale der Anordnung aus einem Statorblech und einem in einer zentralen Ausnehmung des Statorblechs angeordneten Rotorblech gelöst. Vorteilhafte Ausgestaltungen der erfindungsgemäßen Anordnung sind in den abhängigen Ansprüchen beschrieben.

Die erfindungsgemäße Anordnung kombiniert eine gegenüber bekannten Lösungen geänderte Geometrie des Statorblechs mit einer gegenüber bekannten Lösungen ebenfalls geänderten Geometrie des Rotorblechs, so dass an beiden Bauteilen nur vergleichsweise geringe Änderungen nötig sind, um den gewünschten Effekt zu erreichen. Andererseits lässt sich durch entsprechend umfangreichere Eingriffe in die Geometrie des Statorblechs und/oder des Rotorblechs der durch die Erfindung erreichbare Effekt noch deutlich vergrößern.

Beide geometrischen Änderungen bewirken dabei sowohl einzeln als auch in Kombination einen ungleich verteilten Luftspalt zwischen dem Statorblech und dem Rotorblech, um auf diese Weise ein sinusförmiges Luftspaltfeld zu erzeugen. Durch ein solches, durch die Ausführung des Luftspalts zwischen dem Statorblech und dem Rotorblech erzeugtes sinusförmiges Luftspaltfeld lässt sich ein wesentlich besserer Wirkungsgrad eines mit einer solchen Anordnung ausgestatteten Elektromotors erreichen.

Durch die erfindungsgemäße Ausführung des Luftspalts und des dadurch erzeugten Luftspaltfelds wird durch runde Abrisskanten die Polfühligkeit verbessert und die Äquipotenziallinien des Magnetfelds treten gleichmäßiger aus. Es ergibt sich außerdem ein größerer Magnetfluss sowie durch den möglichen Einsatz breiterer Magnete mehr Varianz bei der Polbedeckung und es können Rast- und Ripplemomente verringert werden. Durch die erfindungsgemäße Ausführung des Rotorblechs können außerdem größere Magnete eingesetzt werden, wodurch sich ein größeres Drehmoment und damit auch eine größere Leistung des Elektromotors ergeben.

Ein weiterer Vorteil des sich durch die erfindungsgemäße Anordnung ergebenden Luftspalts zwischen dem Stator und dem Rotor besteht darin, dass die Regelung des mit einer solchen Anordnung ausgestatteten Elektromotors deutlich weniger Aufwand erfordert als dies bei bekannten Lösungen der Fall ist.

Eine weitere Verbesserung der Form und damit auch der Wirkung des Luftspalts ergibt sich, wenn in einer sehr vorteilhaften Weiterbildung der Erfindung der Verlauf der Außenkontur des Rotorblechs von den ersten Bereichen zu den zweiten Bereichen im Wesentlichen einer Sinusfunktion folgt.

Wenn des Weiteren die Außenkontur des Rotorblechs an zwei aneinander angrenzenden ersten Bereichen tangential ineinander übergeht, so lassen sich Streufelder vermeiden und die Effizienz und somit der Wirkungsgrad des mit einer solchen Anordnung ausgestatteten Elektromotors noch weiter verbessern.

Dasselbe gilt, wenn die Außenkontur des Rotorblechs an zwei aneinander angrenzenden zweiten Bereichen tangential ineinander übergeht.

Besonders vorteilhaft ist eine Kombination dieser beiden Ausführungen, d.h. dass die Außenkontur sowohl an dem aneinander angrenzenden ersten als auch an den aneinander angrenzenden zweiten Bereichen tangential ineinander übergeht.

Eine sehr einfache Realisierung der Vergrößerung des Radius der Krümmung gegenüber dem Radius der zentralen Ausnehmung ergibt sich, wenn der Mittelpunkt des Radius der Krümmung wenigstens annähernd um den Betrag, um den der Radius der Krümmung gegenüber dem Radius der zentralen Ausnehmung vergrößert ist, von dem Mittelpunkt der zentralen Ausnehmung des Statorblechs in Richtung weg von der Krümmung versetzt ist. Auf diese Weise lässt sich die gewünschte Wirkung besonders gut erreichen.

Eine weitere vorteilhafte Ausgestaltung der Erfindung kann darin bestehen, dass die Krümmung der Polschuhe in ihren in Umfangsrichtung betrachtet äußeren Bereichen jeweils in einen konvexen Radius übergehen. Durch einen solchen Radius wird ein verbesserter Verlauf der Magnetfeldlinien erreicht, wodurch sich Streufelder und ähnliche negative Auswirkungen vermeiden lassen.

Im Sinne einer optimalen Gestaltung der Polschuhe hat es sich als besonders vorteilhaft herausgestellt, wenn der konvexe Radius der Polschuhe erheblich kleiner ist als der die konkave Krümmung bildende Radius.

Ein Elektromotor mit einem Stator und einem Rotor ist in Anspruch 8 angegeben.

Ein solcher Elektromotor, der die erfindungsgemäße Anordnung aus Stator- und Rotorblechen nutzt, weist sämtliche der oben angegebenen Vorteile auf und kann daher mit einem wesentlich besseren Wirkungsgrad betrieben werden als bekannte Elektromotoren. Auch das Drehmoment und dadurch die Leistung des Elektromotors kann deutlich erhöht werden.

Aus Anspruch 9 ergibt sich ein Statorblech für einen Stator eines Elektromotors.

In Anspruch 10 ist ein Rotorblech für einen Rotor eines Elektromotors angegeben.

Ergänzend sei darauf hingewiesen, dass Begriffe, wie "umfassend" "aufweisen" oder "mit" keine anderen Merkmale oder Schritte ausschließen. Ferner schließen Begriffe "ein" oder "das", die auf einer Einzahl von Schritten oder Merkmalen hinweisen, keine Mehrzahl von Merkmalen oder Schritten aus und umgekehrt.

Weitere Merkmale und Vorteile der Erfindung ergeben sich aus der nachfolgenden Beschreibung eines Ausführungsbeispiels der Erfindung. Die Figuren zeigen mehrere Merkmale der Erfindung in Kombination miteinander. Selbstverständlich vermag der Fachmann diese jedoch auch losgelöst voneinander zu betrachten und gegebenenfalls zu weiteren sinnvollen Unterkombinationen zu kombinieren, ohne hierfür erfinderisch tätig werden zu müssen.

Es zeigen schematisch:
- Figur 1: einen Elektromotor mit einem Stator und einem Rotor;
- Figur 2: ein Statorblech einer erfindungsgemäßen Anordnung;
- Figur 3: eine vergrößerte Darstellung nach der Linie III aus Figur 2;
- Figur 4: ein Rotorblech einer erfindungsgemäßen Anordnung;
- Figur 5: eine erfindungsgemäße Anordnung aus dem Statorblech von Figur 2 und dem Rotorblech von Figur 4; und
- Figur 6: eine alternative Ausführungsform der erfindungsgemäßen Anordnung.

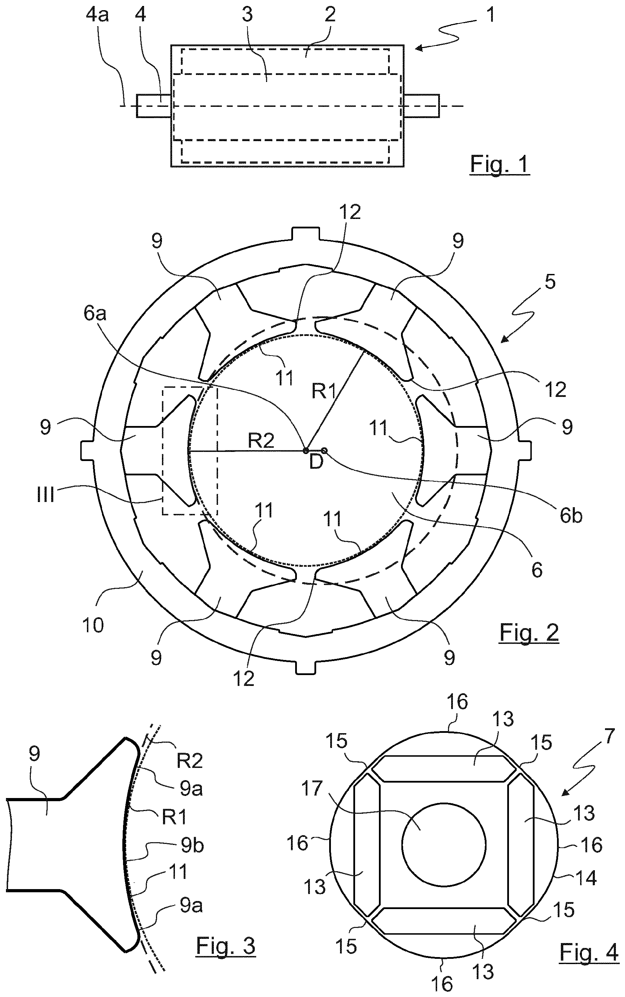

Figur 1 zeigt eine sehr schematische Darstellung eines Elektromotors 1 mit einem Stator 2 und einem in an sich bekannter Weise innerhalb des Stators 2 angeordneten Rotor 3. Der Rotor 3 weist in ebenfalls an sich bekannter Weise eine Rotorwelle 4 auf. Bei dem Elektromotor 1 handelt es sich vorzugsweise um eine permanenterregte Synchronmaschine, die sowohl netz- als auch akkubetrieben sein kann.

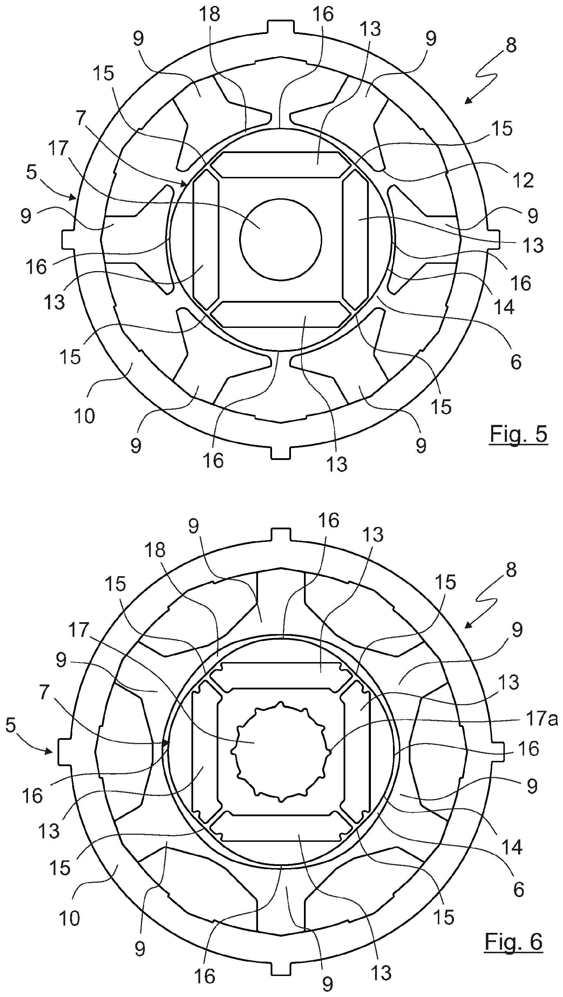

In Figur 2 ist eine Ausführungsform eines Statorblechs 5 dargestellt, das ein Bestandteil des Stators 2 ist. Das Statorblech 5 weist eine zentrale Ausnehmung 6 auf, die zur Aufnahme eines in Figur 4 dargestellten Rotorblechs 7 dient. Die Figuren 5 und 6 zeigen eine Anordnung 8 aus dem Statorblech 5 und dem in der zentralen Ausnehmung 6 des Statorblechs 5 angeordneten Rotorblech 7.

Das Statorblech 5 weist des Weiteren mehrere Polschuhe 9 auf, die sich von einem äußeren Rand 10 des Statorblechs 5 in Richtung eines Mittelpunkts 6a der zentralen Ausnehmung 6 für das Rotorblech 7 erstrecken. Im vorliegenden Fall handelt es sich um sechs Polschuhe 9, es ist jedoch, in Abhängigkeit von der Größe und der Funktion des Elektromotors 1 auch eine andere Anzahl an Polschuhen 9 denkbar. Zwischen jeweils zwei der Polschuhe 9 ist in nicht dargestellter Weise die Wicklung des Stators 2 vorgesehen.

Der Mittelpunkt 6a liegt auf einer Längsachse 4a der Rotorwelle 4, die gleichzeitig die Längsachse und, je nach Ausführung des Elektromotors, auch die Symmetrieachse des Stators 2 und des Rotors 3 darstellt. Die Polschuhe 9 weisen an ihrer dem Rotorblech 7 zugewandten Seite, d.h. an ihrem inneren Rand, jeweils eine konkave Krümmung 11 auf. Die Krümmungen 11 der Polschuhe 9 bilden gemeinsam den äußeren Rand der zentralen Ausnehmung 6.

Die Krümmung 11 weist dabei einen gegenüber dem Radius der zentralen Ausnehmung 6 vergrößerten Radius auf. In Figur 2 ist der Radius der zentralen Ausnehmung 6 mit R1 und der Radius der Krümmung 11 mit R2 bezeichnet und es ist erkennbar, dass der Radius R2 der Krümmung 11 größer ist als der Radius R1 der zentralen Ausnehmung 6.

Der Mittelpunkt des Radius R2 der Krümmung 11 ist wenigstens annähernd um den Betrag, um den der Radius R2 gegenüber dem Radius R1 vergrößert ist, von dem Mittelpunkt 6a der zentralen Ausnehmung 6 des Statorblechs 5 in Richtung weg von der Krümmung 11 bzw. weg von dem betreffenden Polschuh 9 versetzt. Diese Differenz zwischen dem Radius R2 und dem Radius R1 und damit der Versatz des Mittelpunkts des Radius R2 ist in Figur 2 mit "D" bezeichnet. Der Punkt, von dem der Radius R2 ausgeht, ist in Figur 2 mit "6b" bezeichnet.

In Figur 2 ist dies durch einen sehr eng gestrichelten Kreis für den Radius R1 und einen sehr breit gestrichelten Kreis für den Radius R2 dargestellt. Im vorliegenden Fall ist dieser sehr breit gestrichelte Kreis des Radius R2 für den ganz linken Polschuh 9 eingezeichnet. Selbstverständlich wird jeder der im vorliegenden Fall insgesamt sechs Polschuhe 9 durch einen eigenen Kreis gemäß den obigen Vorgaben definiert, der dann um den Betrag der Differenz zwischen dem Radius R2 und dem Radius R1 von dem jeweiligen Polschuh 9 weg in die entsprechende Richtung versetzt ist. Jeder Polschuh 9 weist also eine eigene Krümmung 11 mit demselben, kontinuierlichen, d.h. sich nicht verändernden Radius R2 auf, sodass sich für jeden der Polschuhe 9 an der dem Rotorblech 7 zugewandten Seite ein kontinuierlicher Kreisbogen ergibt. Jeder der Radien R2 des jeweiligen Polschuhs 9 weist dabei jedoch, wie oben beschrieben, einen anderen Mittelpunkt auf.

Es wird deutlich, dass sich auf diese Weise in den äußeren Bereichen 9a der Polschuhe 9 ein größerer Abstand zwischen dem Statorblech 5 und dem Rotorblech 7 ergibt als in dem mittleren Bereich 9b der Polschuhe 9. Dies ist auch in den Figuren 5 und 6 erkennbar. Dadurch weist die Krümmung 11 des Polschuhs 9 lediglich im mittleren Bereich 9b den "korrekten" Abstand von dem Mittelpunkt 6a der zentralen Ausnehmung 6 auf, wohingegen in den äußeren Bereichen 9a ein größerer Abstand von dem Mittelpunkt 6a der zentralen Ausnehmung 6 gegeben ist. Hierbei ist ein minimaler Luftspalt zwischen dem Statorblech 5 und dem Rotorblech 7 nicht eingerechnet.

Auch die vergrößerte Darstellung von Figur 3 zeigt einen Teil des Verlaufs der beiden Radien R1 und R2, aus dem der Effekt, der sich dadurch ergibt, dass die Krümmung 11 einen gegenüber dem Radius R1 der zentralen Ausnehmung 6 vergrößerten Radius R2 aufweist, zu erkennen ist. Der Unterschied zwischen den beiden Radien R1 und R2 hängt sowohl vom Einsatzzweck als auch von der Größe des Elektromotors 1 ab.

Des Weiteren ist sowohl in Figur 2 als auch in der vergrößerten Darstellung von Figur 3 erkennbar, dass die Krümmung 11 der Polschuhe 9 in ihren in Umfangsrichtung betrachtet äußeren Bereichen 9a jeweils in einen konvexen Radius 12 übergeht. Dieser konvexe Radius 12 der Polschuhe 9 ist erheblich kleiner als der die konkave Krümmung 11 bildende Radius R2. Durch den Radius 12 wird ein besserer Verlauf der Magnetfeldlinien erreicht und die Entstehung von Streufeldern wird verringert.

Figur 4 zeigt ein Ausführungsbeispiel des Rotorblechs 7. Dieses weist mehrere Magnettaschen 13 zur Aufnahme jeweiliger nicht dargestellter Magnete auf. Des Weiteren weist das Rotorblech 7 eine von einer Kreisform abweichende Außenkontur 14 auf. In jeweiligen ersten Bereichen 15 der Außenkontur 14, in denen jeweils zwei der Magnettaschen 13 aneinander angrenzen, weist ein sich auf der Außenkontur 14 befindender Punkt einen kleineren Abstand von dem Mittelpunkt 6a des Rotorblechs 7 auf als in jeweiligen zweiten Bereichen 16 der Außenkontur 14, die sich mittig zwischen den zwei ersten Bereichen 15 befinden. Mit anderen Worten, der "Durchmesser" des Rotorblechs 7 ist in den ersten Bereichen 15 kleiner als in den zweiten Bereichen 16.

Vorzugsweise folgt der Verlauf der Außenkontur 14 des Rotorblechs 7 von den ersten Bereichen 15 zu den zweiten Bereichen 16 im Wesentlichen einer Sinusfunktion. Die Vergrößerung des "Durchmessers" des Rotorblechs 7 ist dabei in einem Bereich zwischen dem ersten Bereich 15 und dem zweiten Bereich 16 am größten und sowohl in dem ersten Bereich 15 als auch in dem zweiten Bereich 16 am geringsten. Die Differenz zwischen dem kleinsten "Durchmesser" und dem größten "Durchmesser" des Rotorblechs 7 hängt dabei sowohl von der Anwendung als auch von der Größe des Elektromotors 1 ab.

Des Weiteren geht die Außenkontur 14 des Rotorblechs 7 an zwei aneinander angrenzenden ersten Bereichen 15 vorzugsweise tangential ineinander über. Dasselbe gilt auch für die Außenkontur 14 des Rotorblechs 7 an zwei aneinander angrenzenden zweiten Bereichen 16, in denen diese bevorzugt ebenfalls tangential ineinander übergeht.

In den Figuren 5 und 6 sind zwei Ausführungsformen der Anordnung 8, die das Statorblech 5 und das Rotorblech 7 umfasst, dargestellt. Dabei zeigt Figur 5 exakt das in Figur 2 dargestellte Statorblech 5 und exakt das in Figur 4 dargestellte Rotorblech 7. In Figur 6 ist ein anderes Statorblech 5 dargestellt, dessen Polschuhe 9 in ihren äußeren Bereichen 9a miteinander verbunden sind. Der Stator 2 weist eine Vielzahl der Statorbleche 5 auf, wobei sowohl die in Figur 5 als auch die in Figur 6 dargestellten Statorbleche 5 eingesetzt werden können. Vorzugsweise wird in Richtung der Längsachse 4a nacheinander eine bestimmte Anzahl der in Figur 5 dargestellten Statorbleche 5 und anschließend eine bestimmte Anzahl der in Figur 6 dargestellten Statorbleche 5 eingesetzt.

Das in Figur 6 dargestellte Rotorblech 7 weist eine im Vergleich zu der in Figur 5 dargestellten Ausführungsform andersartig gestaltete Bohrung 17 zur Aufnahme der Rotorwelle 4 auf. Die Bohrung 17 des Rotorblechs 7 weist an ihrem Umfang mehrere Ausnehmungen 17a auf, die die Fläche der Bohrung 17 vergrößern und die zum Eingreifen von nicht dargestellten Vorsprüngen der Rotorwelle 4 dienen. Auch die Magnettaschen 13 des in Figur 6 dargestellten Rotorblechs 7 haben eine andere Ausführungsform als diejenigen von Figur 5.

Erfindungsgemäß ergibt sich durch die oben beschriebene Gestaltung des Statorblechs 5 und des Rotorblechs 7 zwischen diesen Bauteilen und damit zwischen dem Stator 2 und dem Rotor 3 ein Luftspalt 18, der um seinen Umfang ungleich verteilt ist, wodurch sich bei der Rotation des Rotors 3 innerhalb des Stators 2 ein sinusförmiges Luftspaltfeld zwischen dem Rotor 3 und dem Stator 2 ergibt.

## Patentansprüche

1. Anordnung aus einem Statorblech (5) und einem in einer zentralen Ausnehmung (6) des Statorblechs (5) angeordneten Rotorblech (7), wobei das Rotorblech (7) mehrere Magnettaschen (13) zur Aufnahme eines jeweiligen Magneten und eine von einer Kreisform abweichende Außenkontur (14) aufweist, wobei in jeweiligen ersten Bereichen (15) der Außenkontur (14), in denen jeweils zwei der Magnettaschen (13) aneinander angrenzen, ein sich auf der Außenkontur (14) befindender Punkt einen kleineren Abstand von einem auf einer Längsachse (4a) einer Rotorwelle (4) und somit auf einer Längsachse eines Stators (2) und eines Rotors (3) liegenden Mittelpunkt (6a) des Rotorblechs (7) aufweist als in jeweiligen zweiten Bereichen (16) der Außenkontur (14), die sich mittig zwischen zwei ersten Bereichen (15) befinden, wobei das Statorblech (5) mehrere Polschuhe (9) aufweist, die sich von einem äußeren Rand (10) des Statorblechs (5) in Richtung des Mittelpunkts (6a) der zentralen Ausnehmung (6) des Statorblechs (5) hin zum Rotorblech (7) erstrecken und die an ihrer dem Rotorblech (7) zugewandten Seite eine konkave Krümmung (11) aufweisen, **dadurch gekennzeichnet, dass** die konkave Krümmung (11) der Polschuhe (9) des Statorblechs (5) einen gegenüber dem Radius (R1) der zentralen Ausnehmung (6) des Statorblechs (5) vergrößerten Radius (R2) aufweist.

2. Anordnung nach Anspruch 1,
**dadurch gekennzeichnet, dass** der Verlauf der Außenkontur (14) des Rotorblechs (7) von den ersten Bereichen (15) zu den zweiten Bereichen (16) im Wesentlichen einer Sinusfunktion folgt.

3. Anordnung nach Anspruch 1 oder 2,
**dadurch gekennzeichnet, dass** die Außenkontur (14) des Rotorblechs (7) an zwei aneinander angrenzenden ersten Bereichen (15) tangential ineinander übergeht.

4. Anordnung nach Anspruch 1, 2 oder 3,
**dadurch gekennzeichnet, dass** die Außenkontur (14) des Rotorblechs (7) an zwei aneinander angrenzenden zweiten Bereichen (16) tangential ineinander übergeht.

5. Anordnung nach einem der Ansprüche 1 bis 4,
**dadurch gekennzeichnet, dass** der Mittelpunkt des Radius (R2) der Krümmung (11) wenigstens annähernd um den Betrag, um den der Radius (R2) der Krümmung (11) gegenüber dem Radius (R1) der zentralen Ausnehmung (6) vergrößert ist, von dem Mittelpunkt (6a) der zentralen Ausnehmung (6) des Statorblechs (5) in Richtung weg von der Krümmung (11) versetzt ist.

6. Anordnung nach einem der Ansprüche 1 bis 5,
**dadurch gekennzeichnet, dass** die Krümmung (11) der Polschuhe (9) in ihren in Umfangsrichtung betrachtet äußeren Bereichen (9a) jeweils in einen konvexen Radius (12) übergehen.

7. Anordnung nach Anspruch 6,
**dadurch gekennzeichnet, dass** der konvexe Radius (12) der Polschuhe (9) erheblich kleiner ist als der die konkave Krümmung (11) bildende Radius (R2).

8. Elektromotor (1) mit einem Stator (2) und einem Rotor (3), wobei der Stator (2) und der Rotor (3) durch jeweilige Anordnungen (8) aus Statorblechen (5) und Rotorblechen (7) gemäß einem der Ansprüche 1 bis 7 gebildet ist.

9. Statorblech (5) für eine Anordnung gemäß einer der Ansprüche 1 bis 7 für einen Stator (2) eines Elektromotors (1), mit einer zentralen Ausnehmung (6) für ein Rotorblech (7), mit mehreren Polschuhen (9), die sich von einem äußeren Rand (10) des Statorblechs (5) in Richtung des Mittelpunkts (6a) der zentralen Ausnehmung (6) für das Rotorblech (7) erstrecken und die an ihrer dem Rotorblech (7) zugewandten Seite eine konkave Krümmung (11) aufweisen, **dadurch gekennzeichnet, dass** die Krümmung (11) einen gegenüber dem Radius (R1) der zentralen Ausnehmung (6) vergrößerten Radius (R2) aufweist.

10. Rotorblech (7) für eine Anordnung gemäß einem der Ansprüche 1 bis 7 für einen Rotor (3) eines Elektromotors (1), mit mehreren Magnettaschen (13) zur Aufnahme eines jeweiligen Magneten und mit einer von einer Kreisform abweichenden Außenkontur (14), wobei in jeweiligen ersten Bereichen (15) der Außenkontur (14), in denen jeweils zwei der Magnettaschen (13) aneinander angrenzen, ein sich auf der Außenkontur (14) befindender Punkt einen kleineren Abstand von einem Mittelpunkt (6a) des Rotorblechs (7) aufweist als in jeweiligen zweiten Bereichen (16) der Außenkontur (14), die sich mittig zwischen zwei ersten Bereichen (15) befinden, **dadurch gekennzeichnet, dass** sich durch die Gestaltung des Statorblechs (5) gemäß Anspruch 9 und des Rotorblechs (7) zwischen diesen Bauteilen ein Luftspalt (18) ergibt, der um seinen Umfang ungleich verteilt ist, wodurch sich bei der Rotation des Rotors (3) innerhalb eines Stators (2) ein sinusförmiges Luftspaltfeld zwischen dem Rotor (3) und dem Stator (2) ergibt.

## Claims

1. Arrangement comprising a stator lamination (5) and a rotor lamination (7) arranged in a central recess (6) of the stator lamination (5), wherein the rotor lamination (7) has a plurality of magnet pockets (13) for receiving a respective magnet and an outer contour (14) that deviates from a circular shape, wherein in respective first regions (15) of the outer contour (14), in which two of the magnet pockets (13) adjoin one another, a point located on the outer contour (14) is at a shorter distance from the centre point (6a) of the rotor lamination (7), which lies on a longitudinal axis (4a) of a rotor shaft (4) and thus on a longitudinal axis of a stator (2) and a rotor (3), than in respective second regions (16) of the outer contour (14), which are situated centrally between two first regions (15), wherein the stator lamination (5) comprises a plurality of pole pieces (9) which extend from an outer edge (10) of the stator lamination (5) towards the centre point (6a) of the central recess (6) of the stator lamination (5) and towards the rotor lamination (7), and which have a concave curvature (11) on their side facing the rotor lamination (7), **characterised in that** the concave curvature (11) of the pole pieces (9) of the stator lamination (5) has a radius (R2) greater than the radius (R1) of the central recess (6) of the stator lamination (5).

2. Arrangement according to claim 1,
**characterised in that** the course of the outer contour (14) of the rotor lamination (7) from the first regions (15) to the second regions (16) essentially follows a sine function.

3. Arrangement according to claim 1 or 2,
**characterised in that** the outer contour (14) of the rotor lamination (7) merges tangentially at two adjacent first regions (15).

4. Arrangement according to claim 1, 2 or 3,
**characterised in that** the outer contour (14) of the rotor lamination (7) merges tangentially at two adjacent second regions (16).

5. Arrangement according to any one of claims 1 to 4,
**characterised in that** the centre of the radius (R2) of the curvature (11) is displaced, at least approximately, by the amount by which the radius (R2) of the curvature (11) is increased relative to the radius (R1) of the central recess (6), from the centre point (6a) of the central recess (6) of the stator lamination (5) in a direction away from the curvature (11).

6. Arrangement according to any one of claims 1 to 5,
**characterised in that** the curvature (11) of the pole pieces (9) respectively transitions into a convex radius (12) in their outer regions (9a) as viewed in the circumferential direction.

7. Arrangement according to claim 6,
**characterised in that** the convex radius (12) of the pole pieces (9) is considerably smaller than the radius (R2) forming the concave curvature (11).

8. Electric motor (1) comprising a stator (2) and a rotor (3), wherein the stator (2) and the rotor (3) are formed by respective arrangements (8) of stator laminations (5) and rotor laminations (7) in accordance with one of claims 1 to 7.

9. A stator lamination (5) for an arrangement according to any one of claims 1 to 7 for a stator (2) of an electric motor (1), comprising a central recess (6) for a rotor lamination (7) and a plurality of pole pieces (9) which extend from an outer edge (10) of the stator lamination (5) towards the centre point (6a) of the central recess (6) for the rotor lamination (7) and which have a concave curvature (11) on their side facing the rotor lamination (7), **characterised in that** the curvature (11) has a radius (R2) greater than the radius (R1) of the central recess (6).

10. Rotor lamination (7) for an arrangement according to any one of claims 1 to 7 for a rotor (3) of an electric motor (1), comprising a plurality of magnet pockets (13) for receiving respective magnets and having an outer contour (14) that deviates from a circular shape, wherein, in respective first regions (15) of the outer contour (14) in which two of the magnet pockets (13) adjoin one another, a point located on the outer contour (14) is at a shorter distance from a centre point (6a) of the rotor lamination (7) than in respective second regions (16) of the outer contour (14) situated centrally between two first regions (15), **characterised in that**, as a result of the design of the stator lamination (5) as per claim 9 and the rotor lamination (7) there is an air gap (18) between these components, which is unevenly distributed around its circumference, whereby, upon rotation of the rotor (3) within the stator (2), a sinusoidal air-gap field is produced between the rotor (3) and the stator (2).

## Revendications

1. Agencement composé d'une tôle de stator (5) et d'une tôle de rotor (7) disposée dans une ouverture centrale (6) de la tôle de stator (5), la tôle de rotor (7) présentant plusieurs logements de l'aimant (13) pour recevoir un aimant respectif et un contour extérieur (14) s'écartant d'une forme circulaire, où dans des zones premières respectives (15) du contour extérieur (14), dans lesquelles deux des logements de l'aimant (13) sont adjacents, un point situé sur le contour extérieur (14) présente une distance plus petite d'un centre (6a) de la tôle de rotor (7) situé sur un axe longitudinal (4a) d'un arbre de rotor (4) et donc sur un axe longitudinal d'un stator (2) et d'un rotor (3) que dans des zones secondes respectives (16) du contour extérieur (14), qui se trouvent au milieu entre deux zones premières (15), la tôle de stator (5) présentant plusieurs pattes polaires (9) qui s'étendent d'un bord extérieur (10) de la tôle de stator (5) en direction du centre (6a) de l'ouverture centrale (6) de la tôle de stator (5) vers la tôle de rotor (7) et qui présentent sur leur côté orienté vers la tôle de rotor (7) une courbure concave (11), **caractérisé en ce que** la courbure concave (11) des pattes polaires (9) de la tôle de stator (5) présente un rayon (R2) augmenté par rapport au rayon (R1) de l'ouverture centrale (6) de la tôle de stator (5).

2. Agencement selon la revendication 1, **caractérisé en ce que** le tracé du contour extérieur (14) de la tôle de rotor (7) suit essentiellement une fonction sinusoïdale des zones premières (15) vers les zones secondes (16).

3. Agencement selon la revendication 1 ou 2, **caractérisé en ce que** le contour extérieur (14) de la tôle de rotor (7) se prolonge tangentiellement l'un dans l'autre à deux zones premières (15) adjacentes.

4. Agencement selon la revendication 1, 2 ou 3, **caractérisé en ce que** le contour extérieur (14) de la tôle de rotor (7) se prolonge tangentiellement l'un dans l'autre à deux zones secondes (16) adjacentes.

5. Agencement selon l'une des revendications 1 à 4, **caractérisé en ce que** le centre du rayon (R2) de la courbure (11) est au moins approximativement décalé du montant par lequel le rayon (R2) de la courbure (11) est augmenté par rapport au rayon (R1) de l'ouverture centrale (6), du centre (6a) de l'ouverture centrale (6) de la tôle de stator (5) dans une direction s'éloignant de la courbure (11).

6. Agencement selon l'une des revendications 1 à 5, **caractérisé en ce que** la courbure (11) des pattes polaires (9) dans leurs zones extérieures (9a) considérées en direction circonférentielle passent respectivement dans un rayon convexe (12).

7. Agencement selon la revendication 6, **caractérisé en ce que** le rayon convexe (12) des pattes polaires (9) est sensiblement plus petit que le rayon (R2) formant la courbure concave (11).

8. Moteur électrique (1) avec un stator (2) et un rotor (3), le stator (2) et le rotor (3) étant formés par des agencements respectifs (8) de tôles de stator (5) et de tôles de rotor (7) selon l'une des revendications 1 à 7.

9. Tôle de stator (5) pour un agencement selon l'une des revendications 1 à 7 pour un stator (2) d'un moteur électrique (1), avec une ouverture centrale (6) pour une tôle de rotor (7), avec plusieurs pattes polaires (9) qui s'étendent d'un bord extérieur (10) de la tôle de stator (5) en direction du centre (6a) de l'ouverture centrale (6) pour la tôle de rotor (7) et qui présentent sur leur côté orienté vers la tôle de rotor (7) une courbure concave (11), **caractérisé en ce que** la courbure (11) présente un rayon (R2) augmenté par rapport au rayon (R1) de l'ouverture centrale (6).

10. Tôle de rotor (7) pour un agencement selon l'une des revendications 1 à 7 pour un rotor (3) d'un moteur électrique (1), avec plusieurs logements de l'aimant (13) pour recevoir un aimant respectif et avec un contour extérieur (14) s'écartant d'une forme circulaire, où dans des zones premières respectives (15) du contour extérieur (14), dans lesquelles deux des logements de l'aimant (13) sont adjacents, un point situé sur le contour extérieur (14) présente une distance plus petite d'un centre (6a) de la tôle de rotor (7) que dans des zones secondes respectives (16) du contour extérieur (14), qui se trouvent au milieu entre deux zones premières (15), **caractérisé en ce que** par la conception de la tôle de stator (5) selon la revendication 9 et de la tôle de rotor (7), il en résulte entre ces composants un entrefer (18) qui est réparti de manière inégale sur son pourtour, ce qui donne lors de la rotation du rotor (3) à l'intérieur d'un stator (2) un champ d'entrefer sinusoïdal entre le rotor (3) et le stator (2).
